# EUROPEAN PATENT APPLICATION

(11) **EP 2 475 070 A1**
(43) Date of publication of application: **11.07.2012**
(21) Application number: 10821636.7
(22) Date of filing: 28.09.2010
(51) Int. Cl.: H02J 9/06, H01M 10/44, H02J 1/00, H02J 7/34, H02J 7/35

(54) **DC POWER DISTRIBUTION SYSTEM**

(30) Priority: 05.10.2009 JP 2009232020
(71) Applicant: Panasonic Corporation, Kadoma-shi Osaka 571-8501 (JP)
(72) Inventor: KOSHIN, Hiroaki, 2-1-61 Shiromi, Chuo-ku, Osaka 540-6207 (JP); INOUE, Takeshi, 2-1-61 Shiromi, Chuo-ku, Osaka 540-6207 (JP); KAGAWA, Takuya, 2-1-61 Shiromi, Chuo-ku, Osaka 540-6207 (JP); KASAYA, Masato, 2-1-61 Shiromi, Chuo-ku, Osaka 540-6207 (JP); KIDERA, Kazunori, 2-1-61 Shiromi, Chuo-ku, Osaka 540-6207 (JP)
(74) Representative: Rocke, Carsten
(86) International application number: PCT/IB2010/002428
(87) International publication number: WO 2011/042779

(57) **Abstract**

A DC power distribution system is equipped with a storage device having a first storage battery, which discharges to electrical apparatuses only during power failure, and a second storage battery, which discharges to electrical apparatuses when service is not interrupted. The electricity storage device and electrical apparatuses are supplied with DC power from a power generation device which generates electricity using natural energy, and DC power which has been converted from AC power supplied from a commercial power source. When the power supply from the electricity generation device and the commercial power source is interrupted, the first storage battery discharges power to the electrical apparatuses.

## Description

### Field of the Invention

The present invention relates to a DC power distribution system.

### Background of the Invention

Conventionally, there is known a DC power distribution system which distributes a DC power to a DC load by associating an AC/DC converter converting AC power supplied from a power system into DC power with a distributed power source such as a solar cell and fuel cell. Generally, the DC power distribution system includes a storage battery as an emergency power source to supply the DC power to the DC load in an emergency such as a power failure at night. Further, at ordinary times, the storage battery is charged by the DC power supplied from the AC/DC converter or the distributed power source such as a solar cell and fuel cell, and the storage battery is discharged in an emergency to supply the DC power to the DC load.

In the DC distribution system disclosed in Patent Document 1, for example, if a power failure has not occurred in the power system and the remaining capacity of the storage battery is greater than a predetermined percentage (e.g., 20%) of the full charge capacity, the storage battery is discharged. Then, the storage battery is charged when the remaining capacity of the storage battery has dropped to the predetermined percentage.

That is, at ordinary times, the DC power stored in the storage battery is supplied to the DC load as long as the remaining capacity of the storage battery is not less than the remaining capacity required in the power failure. In this case, the storage battery is always maintained in a state where the power capacity of the predetermined percentage is stored as the DC power required in an emergency such as a power failure. Thus, in case of emergency, the required DC power can be supplied to the DC load.

[Patent Document 1] Japanese Patent Application Publication No. 2009-159730

Meanwhile, in the conventional DC distribution system, the charging and discharging of the storage battery are controlled such that the remaining capacity does not fall below the predetermined percentage, but it is concerned that it may be impossible to ensure the power required in the power failure. Since a terminal voltage of the storage battery is proportionate to the remaining capacity (charged state) of the storage battery, the remaining capacity of the storage battery can be estimated based on the terminal voltage of the storage battery. For example, if the terminal voltage of the storage battery is changed from 30 V when fully charged to 15 V which is half of that when fully charged, the remaining capacity of the storage battery is estimated to be 50%.

However, the storage battery deteriorates with time due to a temperature change in the installation environment, repetitive charging and discharging or the like. Further, the total capacity of the storage battery, i.e., the amount of power when fully charged changes due to the aging of the storage battery. For example, if the amount of power when fully charged is 100 Wh when the storage battery is a new product, the amount of power when fully charged is 80 Wh when the storage battery has degraded.

Further, in the system of Patent Document 1, if the amount of power corresponding to 20% of the capacity (100%) when fully charged is reserved for the emergency, the amount of power reserved for the emergency is 20 Wh in the new product and 16 Wh in the degraded product. In this case, the terminal voltage when fully charged will be the same value regardless of changes in the total capacity of the storage battery. As in the above-mentioned example, if the terminal voltage of the new product when fully charged is 30 V, the terminal voltage of the degraded product when fully charged is also 30 V.

Accordingly, although the charged state (%) of the storage battery required based on the terminal voltage of the storage battery is the same, the amount of power actually stored in the storage battery is different between the new product and the degraded product. Thus, even if the system determines that the constant remaining capacity has been ensured, it is concerned that the actual remaining capacity may be less than a predetermined percentage of the total capacity of the new storage battery. In this case, the power required during the power failure may_ not be provided sufficiently.

### Summary of the Invention

In view of the above, the present invention provides a DC power distribution system capable of more reliably ensuring the power required in the power failure.

In accordance with an aspect of the present invention, there is provided a DC power distribution system including: a storage device, wherein the storage device includes a first storage battery which is discharged to supply a power to an electric device only in a power failure, and a second storage battery which is discharged to supply a power to the electric device in a normal mode. The storage device and the electric device are supplied with a DC power from a power generation device which generates power using natural energy and a DC power which has been converted from an AC power supplied from a commercial power source, and the first storage battery is discharged to supply a power to the electric device when the power supply from the power generation device and the commercial power source is interrupted.

With the present invention, the power of the first storage battery is not used when it is not in the power failure. That is, the power stored in the first storage battery is reserved for the power failure and supplied to the DC devices during the power failure and the like. As described earlier, the power stored in the single storage battery is used for the power failure as well as normal times in the conventional example. In this case, it may be impossible to sufficiently ensure the power for the power failure due to the degradation of the storage battery and the like.

In this regard, with the present invention, by separately providing the first storage battery for exclusive use, which is discharged only in the power failure of the commercial power source and the second storage battery for normal use, which is discharged when it is not in the power failure, e.g., at night, the power required in the power failure is reliably ensured by the first storage battery for exclusive use. Further, during the non-power failure or when the power generation device cannot perform power generation, it is possible to use the power stored in the second storage battery. Thus, it is convenient to use.

The DC power distribution system may further include a controller for controlling charging and discharging of the first and second storage batteries, wherein the controller may switch roles of the first and second storage batteries at a predetermined timing.

If the first and second storage batteries are independently used for the power failure and when it is not in the power failure, respectively, the number of times of charging and discharging of the second storage battery when not in the power failure is significantly larger than that of the first storage battery which is discharged only in the power failure. Accordingly, the second storage battery is easier to deteriorate than the first storage battery.

In this regard, according to the present invention, by switching the roles of the first and second storage batteries at a predetermined timing, it is possible to equalize the number of times of charging and discharging of the first and second storage batteries. Thus, it is possible to equalize the lives of the first and second storage batteries. Further, the control unit controls the storage battery for the ordinary times to discharge and the storage battery for the power failure not to discharge at normal times. That is, the control unit discharges the storage battery for the power failure only in an emergency such as a power failure.

In the DC power distribution system, at least one of the first and second storage batteries may be accommodated under a floor of a building.

It is usually low in temperature under the floor of the building, which is stably maintained. And the self-discharge amount of the storage battery depends on the temperature and increases as the temperature increases. For that reason, it is preferable to install the storage battery under the floor of the building. With the present invention, the temperature rise of the storage battery is suppressed, thereby achieving the long life of the storage battery.

Further, the DC power distribution system may include a setting unit which sets roles of the first and second storage batteries to a role for the power failure or a role for the normal mode through manual operation.

With the present invention, the roles of the first and second storage batteries can be set to either of the role for the power failure and the role for the ordinary times through the operation of the setting unit. Thus, it is convenient to use.

Preferably, each of the first and second storage batteries is provided as a battery set including a plurality of single batteries, and wherein the setting unit sets respective roles of the single batteries included in the first and second storage batteries to a role for the power failure or a role for the normal mode through manual operation.

With the present invention, the power capacity allocated for the power failure and the power capacity allocated for the ordinary times can be delicately adjusted through the operation of the setting unit. For example, the power capacity allocated for the power failure can be appropriately changed depending on the power failure protection time desired by the user. In this case, it is possible to ensure the proper backup capacity to the user's environment.

Further, it is preferred that the power generation device is a solar cell which generates power using sun light as the natural energy.

### Effects of the Invention

With the present invention, since the storage battery for discharging only in the power failure and the storage battery for discharging at the ordinary times, are separately provided, the backup power required in the power failure can be more reliably ensured.

### Brief Description of the Drawings

The objects and features of the present invention will become apparent from the following description of embodiments, given in conjunction with the accompanying drawings, in which:
FIG. 1 is a block diagram schematically showing a DC power distribution system;
FIG. 2 is a block diagram showing a configuration of a control unit in accordance with first and second embodiments of the present invention;
FIGs. 3A and 3B are graphs which illustrate voltage variations of storage batteries for the power failure and the ordinary times in the system in accordance with the second embodiment of the present invention;
FIGs. 4A and 4B are a perspective view and a cross-sectional view showing an installation state of the storage battery for the power failure in accordance with a third embodiment of the present invention, respectively;
FIG. 5 is a block diagram illustrating a configuration of the control unit in accordance with a fourth embodiment of the present invention;
FIGs. 6A to 6C are a front view of a setting switch in the initial state, a circuit diagram showing (series) connection of the storage batteries in the initial state, and a circuit diagram showing (parallel) connection of the storage batteries in the initial state, respectively;
FIGs. 7A to 7C are a front view of the setting switch, a circuit diagram showing (series) connection of the storage batteries, and a circuit diagram showing (parallel) connection of the storage batteries, respectively; and
FIGs. 8A to 8C are a front view of the setting switch, a circuit diagram showing (series) connection of the storage batteries, and a circuit diagram showing (parallel) connection of the storage batteries, respectively.

### Detailed Description of the Embodiments

Hereinafter, embodiments of the present invention will be described in detail with reference to the accompanying drawings which form a part hereof. Throughout the specification and drawings, like reference numerals will be given to like parts having substantially the same function and configuration, and a redundant description thereof will be omitted.

### <First Embodiment>

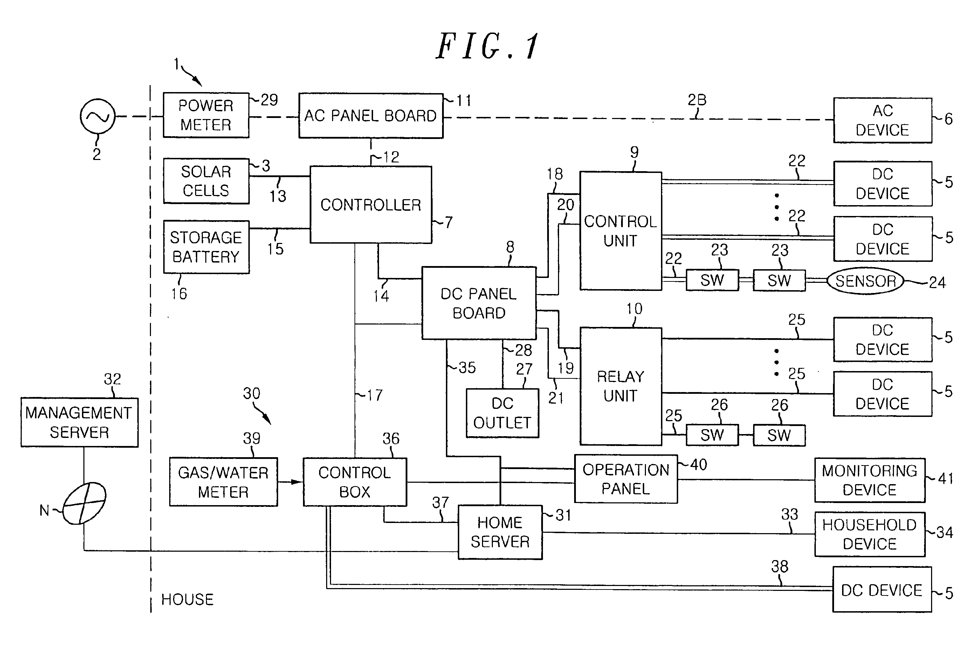

A power distribution system of a house in accordance with a first embodiment of the present invention will be described with reference to FIGS. 1 to 3. First, an overview of the system will be given.

### <Overview of Power Distribution System>

As shown in FIG. 1, the house is provided with a power supply system 1 to supply power to various devices (illumination device, air conditioner, home appliance, audio and visual device, etc.) installed in the home. The power supply system 1 supplies power to various devices not only from a home commercial power source (AC power source) 2 such that the various devices operate, but also from solar cells 3 producing electricity from sun light. The power supply system 1 supplies power to an AC device 6 being operated by an alternating current power source (AC power source) as well as DC devices 5 being operated by a direct current power source (DC power source).

The power supply system 1 includes a controller 7 and a DC panel board (having a DC breaker therein) 8 as a distribution board of the system. Further, the power supply system 1 includes a control unit 9 and a relay unit 10 to control the operation of the DC devices 5 in the house.

Connected to the controller 7 is an AC panel board 11 via an AC power line 12 in which an AC power branches. The controller 7 is connected to the commercial power source 2 via the AC panel board 11 and also connected to the solar cell 3 via a DC power line 13. The controller 7 receives an AC power from the AC panel board 11 and a DC power from the solar cell 3, and converts these power into a specific DC power to be supplied to the devices.

Further, the controller 7 outputs the converted DC power to the DC panel board 8 via a DC power line 14, or outputs the converted DC power to a storage battery 16 via a DC power line 15 to store the power. The controller 7 not only receives the AC power from the AC panel board 11, but also converts the power of the solar cell 3 or the storage battery 16 into an AC power to be supplied to the AC panel board 11. The controller 7 exchanges data with the DC panel board 8 via a signal line 17.

The DC panel board 8 is a kind of breaker for DC power. The DC panel board 8 distributes the DC power inputted from the controller 7, and outputs the distributed DC power to the control unit 9 via a DC power line 18, or outputs the distributed DC power to the relay unit 10 via a DC power line 19. Further, the DC panel board 8 exchanges data with the control unit 9 via a signal line 20, or exchanges data with the relay unit 10 via a signal line 21.

The control unit 9 is connected to a plurality of the DC devices 5. The DC devices 5 are connected to the control unit 9 via DC supply lines 22, each capable of carrying both DC power and data through a pair of wires. Each of the DC supply lines 22 transports both power and data to each of the DC devices 5 via a pair of wires by so-called power line carrier communications in which a communications signal transferring data using high-frequency carrier is superimposed on a DC voltage for operating the DC device.

The control unit 9 obtains the DC power for the DC devices 5 via the DC power line 18, and understands how to control which of the DC devices 5 based on an operation command obtained from the DC panel board 8 via the signal line 20. Then, the control unit 9 outputs the DC voltage and the operation command to the instructed DC device 5 via the DC supply lines 22 to control the operation of the DC device 5.

The control unit 9 is connected via the DC supply line 22 to switches 23 used when switching the operations of the DC devices 5 in the house. In addition, the control unit 9 is connected via the DC supply line 22 to a sensor 24 for detecting a radio wave originating from, e.g., an infrared remote controller. Thus, the DC devices 5 are controlled by the communications signal inputted through the DC supply lines 22 by the operation of the switches 23 or the detection of the sensor 24 in addition to the operation instructions from the DC panel board 8.

Connected to the relay unit 10 is a plurality of the DC devices 5 via individual DC power lines 25. The relay unit 10 obtains the DC power for the DC devices 5 via the DC power line 19, and understands which of the DC devices 5 will be operated based on an operation command obtained from the DC panel board 8 via the signal line 21. Then, the relay unit 10 turns on or off the power supply to the instructed DC devices 5 via the DC power lines 25 by an internal relay to control the operation of the DC devices 5. Further, the relay unit 10 is connected to a plurality of switches 26 for manually operating the DC devices 5. By turning on and off the power supply through the DC power lines 25 by relay using the switches 26, the DC devices 5 are controlled.

The DC panel board 8 is connected via a DC power line 28 to a DC outlet 27 installed in the house in the form of, e.g., a wall outlet or floor outlet. If a plug (not shown) of the DC device is inserted into the DC outlet 27, DC power can be directly supplied to the device.

Further, a power meter 29 is provided between the commercial power source 2 and the AC panel board 11 and the usage of the commercial power source 2 is remotely read from the power meter 29. The power meter 29 has, e.g., a power line carrier communications or wireless communications function in addition to the function of remotely reading the usage of the commercial power source. The power meter 29 transmits the reading results to a power company or the like through the power line carrier communications or wireless communications.

The power supply system 1 is provided with a network system 30 to allow various devices in the house to be controlled through the network communications. The network system 30 includes a home server 31 serving as a controller of the network system 30. The home server 31 is connected to a management server 32 on the outside of the house through a network N such as the Internet, and also connected to a household device 34 via a signal line 33. Further, the home server 31 is operated by the DC power obtained from the DC panel board 8 via a DC power line 35.

The home server 31 is connected to a control box 36 via a signal line 37, the control box 36 managing the operation control of various devices in the house through the network communications. The control box 36 is connected to the controller 7 and the DC panel board 8 via the signal line 17, and also directly controls the DC device 5 via a DC supply line 38. The control box 36 is connected to, e.g., a gas/water meter 39 which allows remotely reading of the amount of gas or water used, and an operation panel 40 of the network system 30. The operation panel 40 is connected to a monitoring device 41 including, e.g., a slave device of an intercommunications system, sensor or camera.

If operation commands of various devices in the house are inputted through the network N, the home server 31 notifies instructions to the control box 36, and operates the control box 36 such that various devices are operated in accordance with the operation commands. Further, the home server 31 provides various pieces of information obtained from the gas/water meter 39 to the management server 32 through the network N. Furthermore, when an error detected by the monitoring device 41 is received from the operation panel 40, the home server 31 provides the received information to the management server 32 through the network N.

### <Storage Battery>

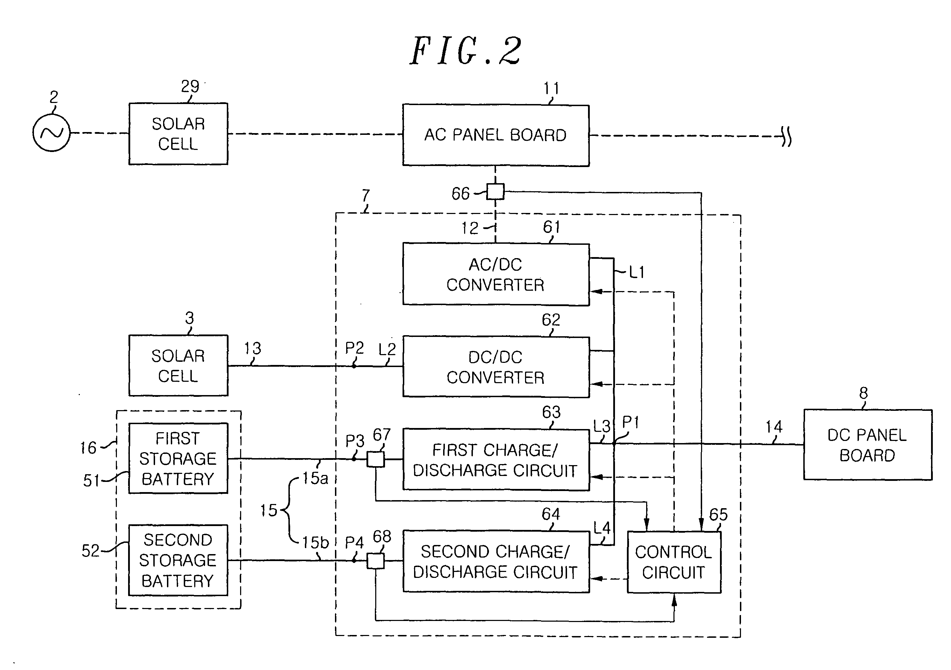

Next, the storage battery 16 will be described. In this embodiment, as shown in FIG. 2, the storage battery 16 includes a first storage battery 51 and a second storage battery 52. The first and second storage batteries 51 and 52 are connected to the controller 7 via DC power lines 15a and 15b constituting the DC power line 15. The first storage battery 51 is set as a backup storage battery whose power is used only when the power supply from the commercial power source 2 and the solar cell 3 is interrupted. The second storage battery 52 is set as a storage battery for night use, whose power is used at night.

Further, the power capacity of the first storage battery 51 is set to sufficiently supply the power required when the power supply from the commercial power source 2 and the solar cell 3 is interrupted. Here, interrupting the power supply from the commercial power source 2 and the solar cell 3 corresponds to a case where the power supply of the commercial power source 2 is interrupted at night when the solar cell 3 cannot perform power generation, for example. Hereinafter, for convenience of explanation, this case is simply referred to as "power failure."

Further, although the first and second storage batteries 51 and 52 are provided outside the controller 7 in this embodiment, these may be provided inside the controller 7. Alternatively, only the first storage battery 51 for backup may be provided inside the controller 7. This is due to the following reason. In other words, unlike a normal mode in which the operating power can be supplied to all of the DC devices 5, it is assumed that in a power failure mode, the operating power can be supplied to only a minimum required portion of the DC devices 5 in many cases.

In this case, the power capacity of the first storage battery 51 for backup may be set to supply the operating power to only the minimum required portion of the DC devices 5 whose operation should be ensured during the power failure. In contrast, it is assumed that the second storage battery 52 being used in the normal mode (ordinary times) is required to supply the operating power to all of the DC devices 5. Considering a difference in the power capacity needed, the size of the second storage battery 52 is likely to be larger than the size of the first storage battery 51. Accordingly, it is preferable that the first storage battery 51 having a smaller size is provided inside the controller 7 and the second storage battery 52 having a larger size is provided outside the controller 7.

### <Controller>

Next, a configuration of the control unit will be described in detail. As shown in FIG. 2, the controller 7 includes a bi-directional AC/DC converter 61, a DC/DC converter 62 for the solar cell, a first charge/discharging circuit 63 corresponding to the first storage battery 51, a second charge/discharging circuit 64 corresponding to the second storage battery 52, and a control circuit 65.

The AC/DC converter 61 is connected to the AC panel board 11 via the AC power line 12, and also connected to a connection terminal P1 for the DC panel board 8 via a DC power line L1, the connection terminal P1 being provided in the controller 7. The connection terminal P1 is connected to the DC panel board 8 via the DC power line 14. The AC power line 12 connecting between the AC/DC converter 61 and the AC panel board 11 is provided with a voltage sensor 66 for detecting AC power (i.e., voltage) supplied from the AC panel board 11.

The DC/DC converter 62 is provided in a DC power line L2 connecting between a connection terminal P2 for the solar cell 3 and the connection terminal P1 for the DC panel board 8, the connection terminal P2 being provided in the controller 7. The DC power line 13 connecting between the controller 7 and the solar cell 3 is provided with a voltage sensor (not shown) for detecting DC power (i.e., voltage) supplied from the solar cell 3.

The first charge/discharging circuit 63 is provided in a DC power line L3 connecting between a connection terminal P3 for the first storage battery 51 and the connection terminal P1 for the DC panel board 8, the connection terminal P3 being provided in the controller 7. Between the first storage battery 51 (precisely, the connection terminal P3) and the first charge/discharging circuit 63, the DC power line L3 is provided with a first voltage sensor 67 for detecting a voltage (terminal voltage) of the first storage battery 51.

The second charge/discharging circuit 64 is provided in a DC power line L4 connecting between a connection terminal P4 for the second storage battery 52 and the connection terminal P1 for the DC panel board 8, the connection terminal P4 being provided in the controller 7. Between the second storage battery 52 (precisely, the connection terminal P4) and the second charge/discharging circuit 64, the DC power line L4 is provided with a second voltage sensor 68 for detecting a voltage (terminal voltage) of the second storage battery 52.

In addition, the first and second charge/discharging circuits 63 and 64 may be internally provided in the first and second storage batteries 51 and 52.

The AC/DC converter 61 has a function of converting an AC power into a DC power and a function of converting a DC power into an AC power. That is, the AC/DC converter 61 coverts the AC power supplied from the AC panel board 11 into a DC power, and supplies the converted DC power to the DC panel board 8 or the first and second storage batteries 51 and 52. Further, the AC/DC converter 61 may convert the DC power supplied from the solar cell 3 and the first and second storage batteries 51 and 52 into an AC power, and may supply the converted AC power to the AC panel board 11. The AC/DC converter 61 switches both of the aforementioned functions based on the switching instructions from the control circuit 65.

The DC/DC converter 62 for the solar cell converts the DC power produced by the solar cell 3 into a predetermined DC power, and supplies the converted DC power to the DC panel board 8 or the storage battery 16.

The first charge/discharging circuit 63 includes a DC/DC converter and the like, and controls the charging and discharging of the first storage battery 51 based on the instructions from the control circuit 65.

The second charge/discharging circuit 64 includes a DC/DC converter and the like, and controls the charging and discharging of the second storage battery 52 based on the instructions from the control circuit 65.

The control circuit 65 controls such that the function (operation mode) of the AC/DC converter 61 is switched between the function of converting an AC power into a DC power and the function of converting a DC power into an AC power. Also, the control circuit 65 controls charging and discharging operations of the first and second storage batteries 51 and 52 through the first and second charge/discharging circuits 63 and 64.

Further, the control circuit 65 detects the remaining capacity (charging state) of the first and second storage batteries 51 and 52 based on the detection results of the first and second voltage sensors 67 and 68 using the fact that the remaining capacities of the first and second storage batteries 51 and 52 are proportionate to the terminal voltages of the first and second storage batteries 51 and 52. For example, the control circuit 65 determines that the remaining capacities of the first and second storage batteries 51 and 52 decrease when the voltage of the first and second storage batteries 51 and 52 is reduced.

Specifically, assuming that the terminal voltage and the capacity of each of the first and second storage batteries 51 and 52 are 30 V and 100 % when being fully charged, the control circuit 65 estimates that the remaining capacity of each of the first and second storage batteries 51 and 52 is 50% when the terminal voltage thereof is 15 V, which is half of that when fully charged. Based on the estimated remaining capacities (charging state) of the first and second storage batteries 51 and 52, the control circuit 65 can control the charging and discharging of the first and second storage batteries 51 and 52.

Further, the control circuit 65 includes, e.g., a clock IC or illuminance sensor (not shown) and acquires, e.g., the time or illuminance outside the house by using the clock IC or the illuminance sensor. If it is determined that the amount of power generated in the solar cell 3 is insufficient, e.g., at night, the control circuit 65 controls the second storage battery 52 to discharge through the second charge/discharging circuit 64. The DC power stored in the second storage battery 52 is supplied to each of the DC devices 5 through the DC panel board 8. Further, if it is determined that the amount of power generated in the solar cell 3 is sufficient, e.g., in the daytime, the control circuit 65 controls the second storage battery 52 to charge through the second charge/discharging circuit 64.

Further, the control circuit 65 determines whether or not a power is supplied from the commercial power source 2, based on the detection results of the voltage sensor 66 if the solar cell 3 cannot perform power generation. If it is determined that the power supply from the commercial power source 2 is interrupted, the control circuit 65 controls the first storage battery 51 to perform a discharging operation through the first charge/discharging circuit 63. The DC power stored in the first storage battery 51 is supplied to each of the DC devices 5 through the DC panel board 8.

The control circuit 65 charges the first storage battery 51 through the first charge/discharging circuit 63 in the normal mode, not in the power failure mode. The control circuit 65 supplies, to the first storage battery 51, the DC power generated by the solar cell 3, e.g., in the daytime, and the DC power supplied through the AC/DC converter 61, e.g., at night. In this way, the control circuit 65 controls the charging operation of the first storage battery 51 such that the charging state (charging level) of the first storage battery 51 is maintained to supply the power required in the power failure to the DC panel board 8.

### <Operation of Power Supply System>

Next, the operation of the power supply system configured as described above will be described.

### <In Daytime>

First, in the daytime, the DC power generated by the solar cell 3 is basically supplied to each of the DC devices 5 through the DC panel board 8. Herein, a surplus power is supplied to the first and second storage batteries 51 and 52. If the DC power generated by the solar cell 3 is insufficient to meet the power required in the DC devices 5, the power stored in the second storage battery 52 is used.

Further, the DC power generated by the solar cell 3 and the DC power of the second storage battery 52 can also be supplied to the AC device 6. Since the first storage battery 51 is set as a backup storage battery to be used in the power failure, the power of the first storage battery 51 is not used for any purpose other than a backup purpose.

### <At Night>

Since the solar cell 3 cannot generate power at night, basically, the DC power stored in the second storage battery 52 is supplied to each of the DC devices 5. In the daytime or the like, the same is true if the sunshine condition is insufficient.

### <In Power Failure>

In a situation where the power generation of the solar cell 3 is impossible, the DC power stored in the first storage battery 51 for backup is basically supplied to each of the DC devices 5 when the power supply of the commercial power source 2 is interrupted, e.g., at night. Accordingly, even in the power failure, for example, the required DC devices 5 can be continuously used. The power stored in the first storage battery 51 is never used in the normal mode (when it is not in the power failure), and the charging state of the first storage battery 51 is always maintained to meet the power capacity required by the DC devices 5 in the power failure. Thus, the power required in the power failure can be surely supplied to the DC devices 5 by the first storage battery 51 for backup.

Further, in the power failure, the power stored in the second storage battery 52 as well as the first storage battery 51 may be supplied to each of the DC devices 5. That is, the control circuit 65 controls the second storage battery 52 set to be used in the normal mode to discharge not only at the ordinary times but also in the power failure. Accordingly, it is possible to more reliably ensure the backup power source in the power failure. Further, it is also possible to increase the backup time during which the power can be supplied to the required DC devices 5, for example.

### <Effects of Embodiment>

With the embodiment of the present invention, the following effects can be obtained.
(1) The first and second storage batteries 51 and 52 have been prepared. Further, the first storage battery 51 serves as a power source for backup, which performs discharging only in the power failure, and the second storage battery 52 serves as a power source for the non-power failure (normal mode), which performs discharging at night or the like when it is difficult for the solar cell 3 to perform power generation. With this configuration, the power required in the power failure is stored independently by using the first storage battery 51. Further, the power stored in the first storage battery 51 is not used in the normal mode. Thus, it is possible to more reliably ensure the power required in the power failure.
(2) Further, since the storage battery for use in the normal mode and the storage battery for use in the power failure are separately provided, it is possible to control the charging and discharging operation of each storage battery. Accordingly, in particular, it is possible to extend the life of the first storage battery 51 for backup. That is, since the first storage battery 51 is discharged only in the power failure, the charging and discharging are not frequently repeated unlike a conventional case where the power required for the power failure and the normal mode is provided by a single storage battery as described earlier. Therefore, it is possible to suppress the degradation of the first storage battery 51, and to ensure the reliable power supply of the backup power source in the power failure.
(3) Further, for example, as compared to the conventional case where the power stored in a single storage battery is shared for the power failure and for the normal mode failure as disclosed above, it is unnecessary to strictly control the remaining capacity of the storage battery. Therefore, it is possible to promote simplification of the charging and discharging control of the storage battery using the control circuit 65.

In the conventional system described earlier, when the power is supplied to the load from the storage battery, it is necessary to control the discharging of the storage battery in a range not less than the remaining capacity required in the power failure of the power system. This is why the power required in the power failure should be ensured. However, in this case, since it is necessary to monitor the remaining capacity of the storage battery, the control associated with the charging and discharging of the storage battery may be complicated. According to the system of this embodiment, since the charging and discharging of the first and second storage batteries 51 and 52 are individually controlled, such a problem does not arise.
(4) With the system of this embodiment, at night when the power generation of the solar cell 3 is impossible, the power generated in the daytime (power stored in the second storage battery 52) can be used. Further, the power required during the power failure can be appropriately supplied by the first storage battery 51 provided separately from the second storage battery 52. Thus, it is convenient to use.

### <Second Embodiment>

Next, a second embodiment of the present invention will be described. The power supply system of this embodiment basically includes the same configuration as shown in FIGS. 1 and 2. Thus, the same components as those of the first embodiment are denoted by the same reference numerals, and a detailed description thereof will be omitted.

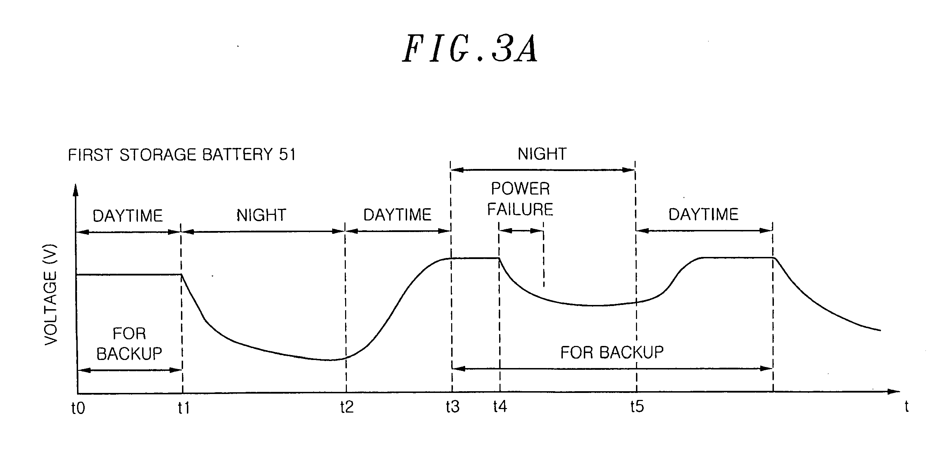

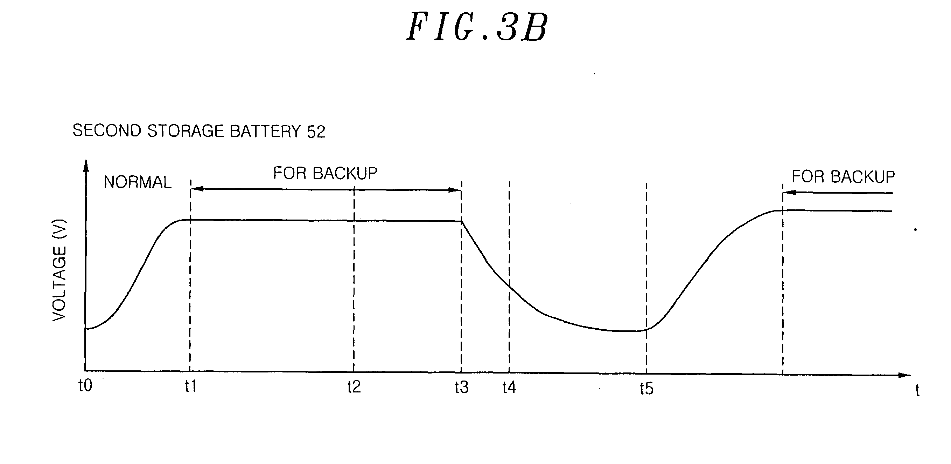

The power supply system 1 of this embodiment is different from the first embodiment in that the roles of the first and second storage batteries 51 and 52 can be switched at a predetermined timing. As shown in graphs of FIGs. 3A and 3B, initially, if the first storage battery 51 is set for the power failure and the second storage battery 52 is set for the normal mode, the first storage battery 51 is maintained in a charged state of a predetermined level (e.g., fully charged state) in the daytime. Further, the second storage battery 52 for the normal mode is charged by the power generated by the solar cell 3 (time t0).

At night, when it is detected that the second storage battery 52 is sufficiently charged (time t1), the control circuit 65 assigns the second storage battery 52 as a power source for the power failure and assigns the first storage battery 51 as a power source for the normal mode. The control circuit 65 controls the first storage battery 51 set for the normal mode to discharge at night. Accordingly, as shown in FIG. 3A, the voltage of the first storage battery 51 is reduced gradually due to the discharge. Further, the second storage battery 52 set for the power failure is not discharged, and the voltage of the second storage battery 52 is maintained.

When the daytime comes again, as shown in FIG. 3A, the control circuit 65 performs the charging of the first storage battery 51 set for the normal mode (time t2). Accordingly, the voltage of the first storage battery 51 increases gradually. At this time, as shown in FIG. 3B, the control circuit 65 performs neither charging nor discharging of the second storage battery 52 set for the power failure. Thus, the voltage of the second storage battery 52 is maintained in a fully charged state.

Then, as shown in FIG. 3A, when the night comes, and it is detected that the first storage battery 51 is sufficiently charged (time t3), the control circuit 65 switches the roles of the first and second storage batteries 51 and 52 again. That is, the control circuit 65 assigns the first storage battery 51 as a power source for the power failure and assigns the second storage battery 52 as a power source for the normal mode. And the control circuit 65 discharges the second storage battery 52 set for the normal mode. As shown in FIG. 3B, the voltage of the second storage battery 52 is reduced gradually due to the discharging.

In the meantime, as shown in FIG. 3A, if it is detected that the power supply of the commercial power source 2 is interrupted (time t4), the control circuit 65 starts the discharging of the first storage battery 51 set for the power failure. Since the first storage battery 51 has been sufficiently charged, the power required can be supplied sufficiently. As the first storage battery 51 is discharged, the voltage of the first storage battery 51 is reduced gradually. Further, as shown in FIG. 3B, the control circuit 65 controls the second storage battery 52 set for the normal mode to continuously discharge even during the power failure.

Further, when the daytime comes (time t5), the control circuit 65 performs the charging of both the first and second storage batteries 51 and 52. After that, when it is detected that the first and second storage batteries 51 and 52 is sufficiently charged, in the same manner as described above, the roles of the first and second storage batteries 51 and 52 can be switched between the role for the power failure and the role for the normal mode.

Further, regardless of whether it is in the daytime or at night, the roles of the first and second storage batteries 51 and 52 may be switched between the role for the power failure and the role for the normal mode based on detecting that the storage battery set for the normal mode has been sufficiently charged. Switching the roles of the first and second storage batteries 51 and 52 is performed through the control of the first and second charge/discharging circuits 63 and 64 using the control circuit 65.

Further, instead of switching the roles of the first and second storage batteries 51 and 52 whenever any one of the first and second storage batteries 51 and 52 is discharged, the roles may be switched between the role for the power failure and the role for the normal mode at a predetermined timing. The switch timing may be regular or irregular. In either case, it is preferable to switch the roles in a state where the storage battery set for the power failure is sufficiently charged.

According to the present embodiment, the following effects can be obtained.
(1) By switching the roles of the first and second storage batteries 51 and 52 at a predetermined timing, it is possible to equalize the number of times of charging and discharging of the first and second storage batteries 51 and 52 and the lives of the batteries.
(2) The voltages of the first and second storage batteries 51 and 52 are monitored, and it is determined whether the storage battery for the normal mode is sufficiently charged. If it is determined that the storage battery for the normal mode is sufficiently charged, the roles are switched between the role for the power failure and the role for the normal mode. Since the storage battery is sufficiently charged and, after that, is switched to the role for the power failure, it is possible to more reliably ensure the power required in the power failure.
(3) When the power failure occurs at night, not only the storage battery set for the power failure is discharged, but also the storage battery set for the normal mode continues to be discharged. Accordingly, it is possible to more reliably ensure the power required in the power failure. Further, even in case of using only the storage battery set for the power failure, it is possible to sufficiently provide the power required by the DC devices during the power failure.

### <Third Embodiment>

Next, a third embodiment of the present invention will be described. The power supply system of this embodiment also basically has the same configuration as shown in FIGs. 1 and 2.

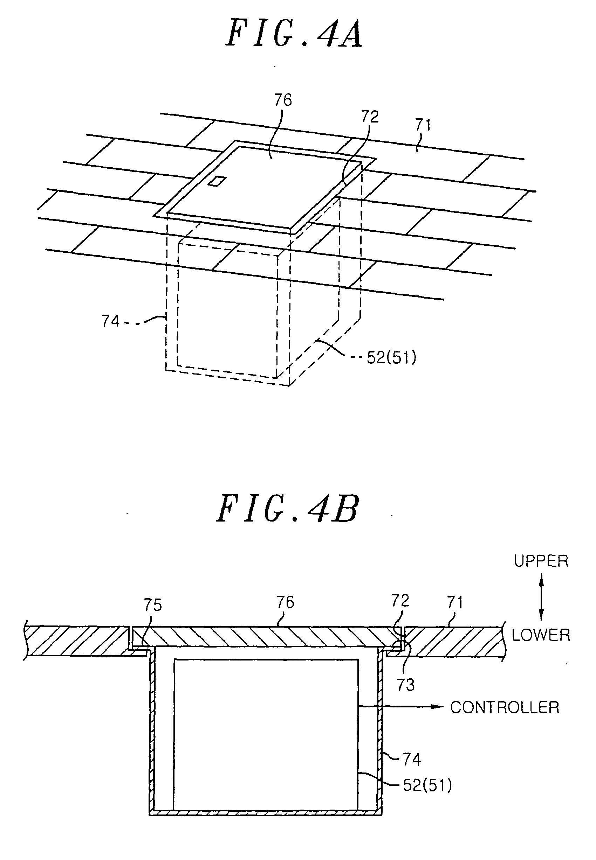

As shown in FIG. 4A and 4B, the second storage battery 52 is placed under the floor in the house. A configuration under the floor is as follows. That is, as shown in FIG. 4B, a floor 71 of the house includes an opening 72 and a step portion 73 formed at an inner periphery of the opening 72. In the opening 72, a storage box 74 is inserted from the top. The storage box 74 is formed to have an opening at the top, and a brim-shaped flange 75 is formed at a peripheral portion of the opening. The flange 75 is engaged with the step portion 73 of the opening 72 to restrict the downward displacement of the storage box 74. That is, the positioning of the storage box 74 in a vertical direction is made. Further, the storage box 74 is formed of an incombustible material or fire retardant material. In addition, the storage box 74 has a water resistance.

The second storage battery 52 is accommodated in the storage box 74 installed under the floor. An outer surface of the second storage battery 52 is spaced from an inner surface of the storage box 74. That is, an air layer is formed between the outer surface of the second storage battery 52 and the inner surface of the storage box 74. The opening at the top of the storage box 74 accommodating the second storage battery 52 is closed by a lid 76 having an outer shape corresponding to an inner shape of the opening 72 of the floor 71. An upper surface of the lid 76 attached to the opening 72 and an upper surface of the floor 71 form one surface without a step.

Therefore, according to the present embodiment, the following effects can be obtained.
(1) The second storage battery 52 is installed under the floor. Since a low temperature and stable environment is formed under the floor, it is possible to extend the life of the second storage battery 52. This is because the degradation of the storage battery is promoted and the life of the storage battery is shortened as an ambient temperature of the storage battery is higher. In addition, it is possible to effectively utilize the space under the floor.
(2) The second storage battery 52 is accommodated in the storage box 74 provided under the floor. Thus, unlike a case where the second storage battery 52 is directly installed under the floor, it is possible to suppress the occurrence of poor insulation between the terminals of the second storage battery 52 or between the second storage battery 52 and the ground due to moisture, dew condensation or the like. In addition, it is possible to suppress the submergence in a flood or the like. In case of flooding under the floor, it is possible to sufficiently protect the second storage battery 52 from the submergence by the configuration shown in FIG. 4B.
(3) The storage box 74 accommodating the second storage battery 52 is formed of an incombustible material or fire retardant material. Since the second storage battery 52 may generate heat for some reasons, it is preferable to accommodate the storage battery in the storage box 74 formed of an incombustible material or fire retardant material.
(4) The second storage battery 52 for the normal mode is accommodated under the floor. That is, it is preferable that the second storage battery 52 whose size is likely to be larger than that of the first storage battery 51 for the power failure is installed under the floor where it is easy to ensure a space.

In addition, the third embodiment may be modified as follows.
- If there is no problem with waterproofing, the storage box 74 may be omitted, and the second storage battery 52 may be installed directly under the floor.
- A heat dissipation structure may be provided in the storage box 74 or the storage battery accommodated in the storage box 74. For example, the storage box 74 is formed of a metal material having thermal conductivity, and an outer surface of the storage battery is brought into contact with an inner wall of the storage box 74. By doing so, if the storage battery generates heat, the heat is transferred to the storage box 74 to be dissipated to the outside (in the atmosphere under the floor).

In this case, wings for heat dissipation or the like may be formed in the storage box 74. Since a surface area of the storage box 74 is ensured, a heat dissipation effect is increased. Thus, by increasing the cooling efficiency of the second storage battery 52, it is possible to extend the life of the storage battery.
- A sealing device such as packing may be provided between the flange 75 of the storage box 74 and the lid 76. Accordingly, it is possible to prevent water or the like from entering the storage box 74 from a gap between the flange 75 and the lid 76. Thus, even in case of, e.g., flooding above the floor, it is possible to suppress the submergence of the storage battery in the storage box 74.
- Instead of the second storage battery 52, the first storage battery 51 may be accommodated in the storage box 74. Also, both of them may be accommodated in the storage box 74.
- The present embodiment may be applied to the second embodiment. That is, also in the second embodiment in which the roles of the first and second storage batteries 51 and 52 can be switched between the role for the power failure and the role for the normal mode, either or both of the first and second storage batteries 51 and 52 may be accommodated under the floor.

### <Fourth Embodiment>

Next, a fourth embodiment of the present invention will be described. The power supply system of this embodiment also basically includes the same configuration as shown in FIGS. 1 and 2.

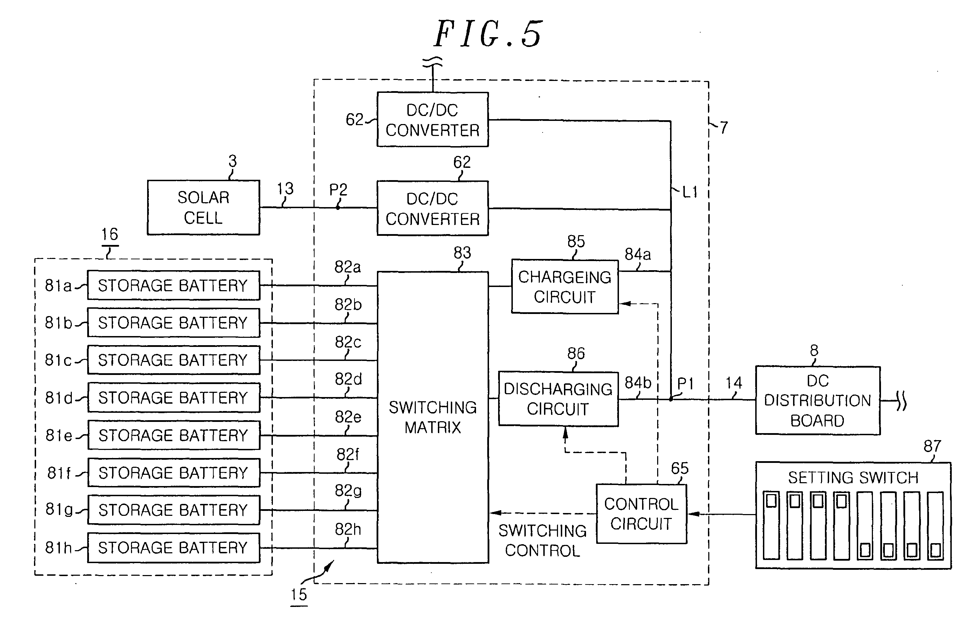

As shown in FIG. 5, the storage battery 16 includes, e.g., eight storage batteries 81a to 81h. Among the storage batteries 81a to 81h, four storage batteries 81a to 81d are set as storage batteries for backup whose power is used only in the power failure, and the remaining four storage batteries 81e to 81h are set as storage batteries for the normal mode whose power is used at night. In the initial state, the first storage battery 51 mentioned in the first embodiment may be a battery set consisting of four single batteries, i.e., the storage batteries 81a to 81d, and the second storage battery 52 mentioned in the first embodiment may be a battery set consisting of four single batteries, i.e., the storage batteries 81e to 81h.

Each of the storage batteries 81a to 81h is connected to a switching matrix 83 provided in the controller 7 via a plurality of DC power lines 82a to 82h constituting the DC power line 15. The switching matrix 83 is connected to the connection terminal P1 for the DC panel board 8 via two DC power lines 84a and 84b. A charging circuit 85 is provided on the DC power line 84a, and a discharging circuit 86 is provided on the DC power line 84b.

The switching matrix 83 is configured such that a connection state between the storage batteries 81a to 81h and between the storage batteries 81a to 81h and the charging circuit 85 or the discharging circuit 86 can be switched in various ways based on a switching signal from the control circuit 65.

For example, the switching matrix 83 connects each of the storage batteries 81a to 81h to the charging circuit 85 or the discharging circuit 86. Accordingly, the charging and discharging of each of the storage batteries 81a to 81h can be individually controlled.

Further, the switching matrix 83 switches the connection state between the storage batteries 81a to 81h. For example, the storage batteries 81a to 81d for the power failure and the storage batteries 81e to 81h for the normal mode are connected in series or in parallel through the switching matrix 83. As the number of the storage batteries connected in series increases, the larger power can be provided. Further, as the number of the storage batteries connected in series or in parallel increases, the storage capacity increases.

Furthermore, the number of the storage batteries connected in series or in parallel may be appropriately changed based on a command signal from the control circuit 65. Specifically, among the eight storage batteries 81a to 81h, five storage batteries 81a to 81e may be connected in series or in parallel and, at the same time, the remaining three storage batteries 81f to 81h may be connected in series or in parallel.

In addition, the switching matrix 83 can individually connect a series circuit or parallel circuit of the storage batteries to the charging circuit 85 or the discharging circuit 86. In this case, it is possible to charge each circuit, i.e., the series circuit or parallel circuit, of the storage batteries, or supply the power from each circuit, i.e., the series circuit or parallel circuit, of the storage batteries.

### <Setting Unit>

As described above, in the initial state, the four storage batteries 81a to 81d among the eight storage batteries 81a to 81h are set for the power failure, and the remaining four storage batteries 81e to 81h are set for the normal mode. In this case, some users may desire to increase or decrease the backup capacity during the power failure. In order to respond to these demands, the system of the present embodiment has adopted the following configuration.

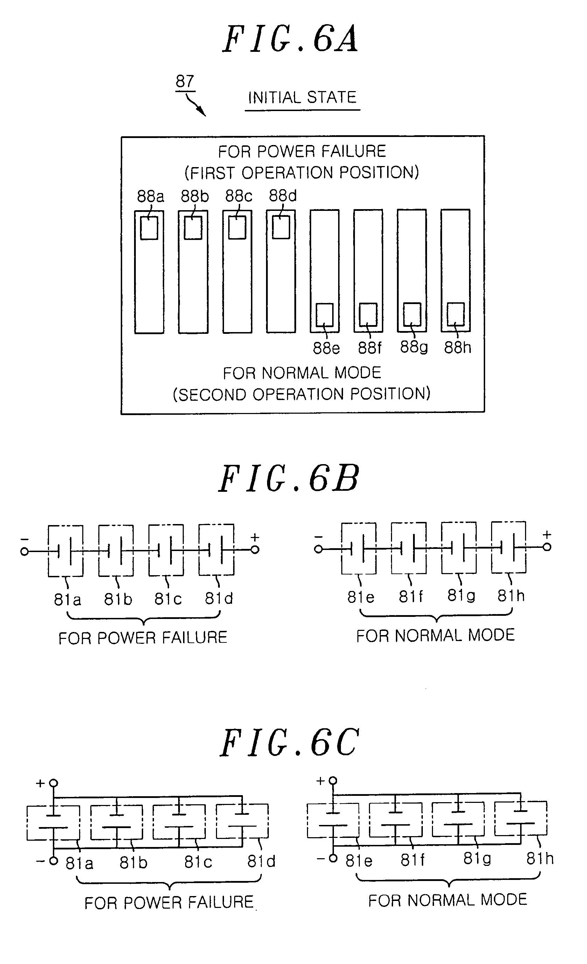

In other words, the control circuit 65 is connected to a setting switch 87 for setting the operating environment of the storage batteries 81a to 81h. As shown in FIG. 6A, the setting switch 87 includes the same number of operation knobs 88a to 88h as that of the storage batteries 81a to 81h. In this example, the operation knobs 88a to 88h are configured as slide type knobs. The operation knobs 88a to 88h slide and change their position between a first operation position at which the role of the storage battery is set for the power failure and a second operation position at which the role of the storage battery is set for the normal mode. The control circuit 65 sets the role of each of the storage batteries 81a to 81h based on the operation position of each of the operation knobs 88a to 88h.

As shown in FIG. 6A, in the initial state, the operation knobs 88a to 88d corresponding to the four storage batteries 81a to 81d set for the power failure are maintained in the first position, and the operation knobs 88e to 88h corresponding to the remaining four storage batteries 81e to 81h set for the normal mode are maintained in the second position. In this case, based on the operation position of each of the operation knobs 88a to 88h, the control circuit 65 connects the storage batteries 81a to 81h through the switching matrix 83 as follows. That is, as shown in FIG. 6B, the four storage batteries 81a to 81d are connected in series, and the four storage batteries 81e to 81h are connected in series.

In addition, the setting switch 87 may be provided in a housing (not shown) of the controller 7, or may be provided in the above-mentioned operation panel 40. Besides, the setting switch 87 may be provided as an independent operation panel.

### <Setting Backup Capacity>

Next, a case where the backup capacity during the power failure is changed and set by a user will be described.

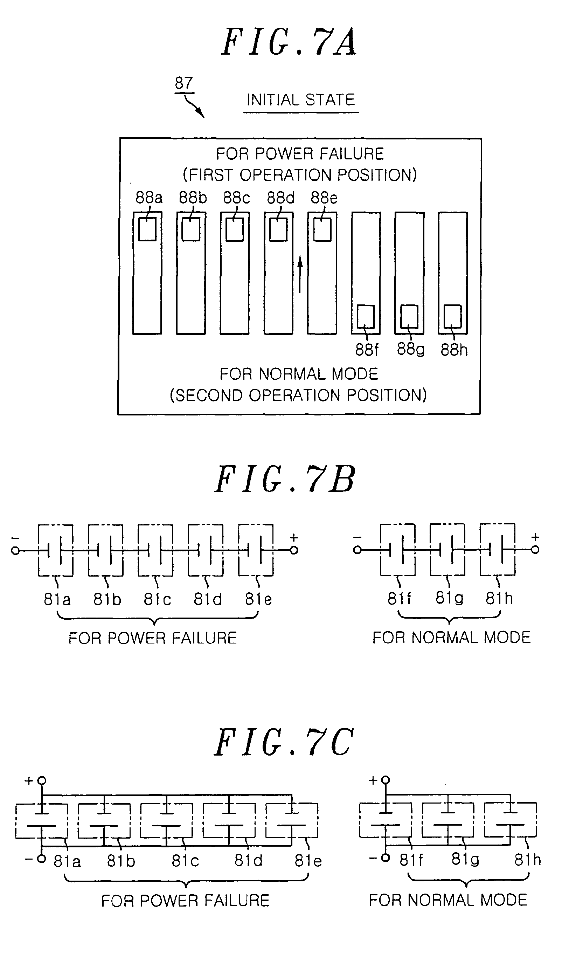

First, in case of increasing the backup capacity during the power failure compared to the initial state, any one of the storage batteries 81e to 81h set for the normal mode in the initial state is set for the power failure. For example, in case of setting the storage battery 81e for the power failure, as shown in FIG. 7A, the operation knob 88e corresponding to the storage battery 81e is moved from the second operation position to the first operation position. As shown in FIG. 7B, when this is detected, the control circuit 65 connects the storage battery 81e in series to the storage batteries 81a to 81d originally set for the power failure through the switching matrix 83. Thus, the backup capacity in the power failure is increased by the power capacity of the storage battery 81e which is connected additionally.

Further, instead of the storage battery 81e, another one of the remaining three storage batteries 81f to 81h set for the normal mode may be connected to the storage batteries for the power failure. Further, in addition to the storage battery 81e, one or two of the remaining three storage batteries 81f to 81h set for the normal mode may be connected additionally. Further, for example, if the storage battery for the normal mode is not required, all storage batteries 81a to 81h can be set for the power failure.

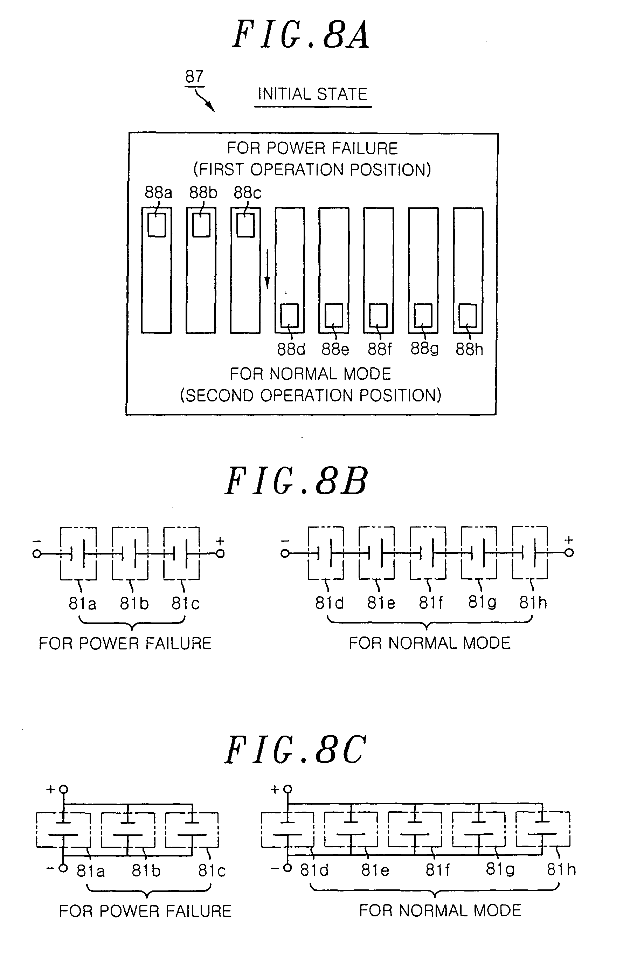

On the contrary, in case of decreasing the backup capacity during the power failure compared to the initial state, any one of the storage batteries 81a to 81d set for the power failure in the initial state is set for the non-power failure. As shown in FIG. 8A, for example, in case of setting the storage battery 81d for the normal mode, the operation knob 88d corresponding to the storage battery 81d is moved from the first operation position to the second operation position.

As shown in FIG. 8B, when it is detected that the operation knob 88d has been changed to the second operation position, the control circuit 65 disconnects the storage battery 81d from the remaining three storage batteries 81a to 81c and also connects the storage battery 81d in series to the storage batteries 81e to 81h originally set for the normal mode through the switching matrix 83. Thus, the backup capacity in the power failure is decreased by the power capacity of the storage battery 81d which has been disconnected from the three storage batteries 81a to 81c.

Further, instead of the storage battery 81d, another one of the remaining three storage batteries 81a to 81c set for the power failure may be set for the normal mode. Alternatively, in addition to the storage battery 81d, one or two of the remaining three storage batteries 81a to 81c set for the power failure may be set for the normal mode. Furthermore, for example, if the backup during the power failure is not required, all storage batteries 81a to 81h can be set for the normal mode.

In addition, as in the initial state shown in FIG. 6C, the four storage batteries 81a to 81d may be connected in parallel and the four storage batteries 81e to 81h may be connected in parallel. In either case, the backup capacity during the power failure can be increased or decreased compared to the initial state in the same manner as the case where the storage batteries are connected in series as described above.

That is, in case of increasing the backup capacity during the power failure compared to the initial state, as shown in FIG. 7C, the storage battery 81e is connected in parallel to the storage batteries 81a to 81d originally set for the power failure. Also in this case, the backup capacity during the power failure is increased by the power capacity of the storage battery 81e.

In case of decreasing the backup capacity during the power failure compared to the initial state, as shown in FIG. 8C, the storage battery 81d is connected in parallel to the storage batteries 81e to 81h originally set for the normal mode. Also in this case, the backup capacity during the power failure is decreased by the power capacity of the storage battery 81d.

According to the present embodiment, the following effects can be obtained.
(1) The user can optionally set the role of each of the storage batteries 81a to 81h to the role for the power failure or the role for the non-power failure through the operation of the setting switch 87. Accordingly, the backup capacity during the power failure can be optionally changed and set by the user through the operation of the setting switch 87. Thus, the backup capacity during the power failure can be ensured suitably depending on the user's environment. Further, in the power failure or normal mode, the appropriate power can be supplied to the DC devices 5 and the like according to the user's environment. Therefore, it is convenient to use.
(2) In case of changing the role of each of the storage batteries 81a to 81h, it can be achieved only by sliding each of the operation knobs 88a to 88h of the setting switch 87. Accordingly, it is possible to easily change, e.g., the backup power capacity for the power failure.

In addition, the fourth embodiment may be modified as follows.
- In the power failure, the power of the storage batteries set for the normal mode (storage batteries 81e to 81h in the initial state) as well as the storage batteries set for the power failure (storage batteries 81a to 81d in the initial state) may be supplied to each of the DC devices 5. That is, the control circuit 65 discharges the storage battery set for the normal mode during the power failure as well as the normal mode. Thus, it is possible to more reliably ensure the backup power during the power failure. Further, it is also possible to increase the backup time during which the power can be supplied to the DC devices 5 and the like.
- The number of storage batteries may be appropriately changed. For example, the number of storage batteries may be more than or less than eight. For example, it is also possible to provide sixteen storage batteries. As the number of storage batteries increases, the backup capacity can be more finely adjusted.

- The present embodiment may be applied to the first embodiment. That is, it is possible to optionally switch the roles of the first and second storage batteries 51 and 52 between the role for the power failure and the role for the normal mode through the setting operation of the user.
- The present embodiment may be applied to the second embodiment. In this case, as shown in the graph of FIG. 3, the roles of the storage batteries 81a to 81d for the power failure and the storage batteries 81e to 81h for the normal mode are switched at a predetermined timing. Thus, it is possible to equalize the number of times of charging and discharging of each of the storage batteries 81a to 81h and also possible to extend the life of each storage battery. Further, in this case, it is preferable to set the number of the storage batteries for the power failure to be equal to the number of the storage batteries for the normal mode.

### <Other Embodiments>

Further, each of the embodiments may be modified as follows.
- In the first to fourth embodiments, in lieu of the solar cell 3 generating power using sun light that is natural energy, a power generation device using natural energy other than sun light may be employed. Further, it is also possible to use the power generation device in combination with the solar cell 3. As a natural energy power generation device other than the solar cell 3, for example, there is a wind power generation apparatus generating power using wind energy, a geothermal power generation apparatus generating power using geothermal energy or the like. Further, a fuel cell may be provided instead of the solar cell 3 or in conjunction with the solar cell 3.
- In the first to fourth embodiments, a case where the power supply system 1 is applied to a detached house has been described, but it is not limited to the detached house. For example, the power supply system 1 may be applied to a multiple dwelling house, an apartment, an office building or the like.

While the invention has been shown and described with respect to the embodiments, it will be understood by those skilled in the art that various changes and modification may be made without departing from the scope of the invention as defined in the following claims.

## Claims

1. A DC power distribution system comprising:
a storage device,
wherein the storage device includes a first storage battery which is discharged to supply a power to an electric device only in a power failure, and a second storage battery which is discharged to supply a power to the electric device in a normal mode.

2. The DC power distribution system of claim 1, wherein the storage device and the electric device are supplied with a DC power from a power generation device which generates power using natural energy and a DC power which has been converted from an AC power supplied from a commercial power source, and
wherein the first storage battery is discharged to supply a power to the electric device when the power supply from the power generation device and the commercial power source is interrupted.

3. The DC power distribution system of claim 2, further comprising a controller for controlling charging and discharging of the first and second storage batteries,
wherein the controller switches roles of the first and second storage batteries at a predetermined timing.

4. The DC power distribution system of claim 2 or 3, wherein at least one of the first and second storage batteries is accommodated under a floor of a building.

5. The DC power distribution system of any one of claims 2 to 4, further comprising a setting unit which sets roles of the first and second storage batteries to a role for the power failure or a role for the normal mode through manual operation.

6. The DC power distribution system of claim 5, wherein each of the first and second storage batteries is provided as a battery set including a plurality of single batteries, and
wherein the setting unit sets respective roles of the single batteries included in the first and second storage batteries to a role for the power failure or a role for the normal mode through manual operation.

7. The DC power distribution system of any one of claims 2 to 6, wherein the power generation device is a solar cell which generates power using sun light as the natural energy.
